Europäisches Patentamt

European Patent Office

Office européen des brevets

(11) Publication number: **0 081 349**
**A1**

## (12) EUROPEAN PATENT APPLICATION

(21) Application number: 82306437.3

(51) Int. Cl.³: **G 02 B 7/26**

(22) Date of filing: 03.12.82

(30) Priority: 03.12.81 US 326868

(43) Date of publication of application:
15.06.83 Bulletin 83/24

(84) Designated Contracting States:
DE FR GB

(71) Applicant: XEROX CORPORATION
Xerox Square - 020
Rochester New York 14644(US)

(72) Inventor: Rawson, Eric G.
20887 Maureen Way
Saratoga California 95070(US)

(74) Representative: Prior, Nicholas J. European Patent
Attorney et al,
Rank Xerox Patent Department 338 Euston Road
London NW1 3BH(GB)

(54) Terminations for optical fibers.

(57) A fused uniconically tapered termination (11) for the optical fibers (13) of a star configured optical communication network which may be used as a divider or as a combiner for coupling a light source (12) or a photodetector, respectively, to the fibers (13) of such a network. Such a termination is particularly well suited for use with a biconically tapered coupler to provide parallel inputs or outputs for such a network.

FIG. 1

EP 0 081 349 A1

-1-

## Terminations for optical fibers

This invention relates to terminations for optical fibers for use in star configured optical communication networks and, more particularly, to optical dividers for coupling a single light source to a plurality of fiber optic waveguides and to optical combiners for coupling a plurality of fiber optic waveguides to a single photodetector.

Star configured network architectures have become increasingly popular for the distribution of optical communication signals because of their relatively low insertion loss characteristics. There now are low loss couplers for such networks, such as the biconically tapered couplers described by Rawson and Nafarrate, "Star Couplers Using Fused Biconically Tapered Multimode Fibers," *Electronics Letters*, Vol. 14, No. 9, April 27, 1978, pp. 274–275 and by Rawson and Bailey, "Bitaper Star Couplers with up to 100 Fibre Channels," *Electronics Letters*, Vol. 15, No. 14, July 5, 1979, pp. 432–433. However, the optical combiners and dividers that have been developed for such networks are relatively inefficient and complex. See, for example, "New Technology Extends Distributed Control Networks," *Amp Designer Digest*, No. 18, Amp Incorporated, Harrisburg, Pa., 1980, pp. 2–4.

Optical combiners and dividers are required, for example, in star networks which utilize active repeatering to boost the signal-to-noise ratio of the optical signal. At such a repeater, a photodetector converts the optical signal carried by a plurality of incoming fibers into a corresponding electrical signal which is then amplified and filtered (i.e., repeatered). The repeatered signal is, in turn, applied to a suitable light source, such as a laser or a light emitting diode (LED), which reconverts it into an optical signal for return transmission to the stations or terminals on the network via a plurality of output fibers.

As will be appreciated, the net improvement in the signal-to-noise ratio of the repeatered optical signal is directly dependent on the optical efficiency of the coupling between the light source and the output fibers (i.e., the optical efficiency of the divider). Heretofore, it has been especially difficult to achieve adequate coupling efficiency when the light source is a high frequency LED because (1) a LED usually radiates over a solid angle of

roughly ± 90° and (2) a high frquency LED typically has an active area that is considerably smaller than the cross sectional area of a plurality of bundled output fibers.

Of course, it is also important that there be efficient coupling of the incoming fibers to the photodetector (i.e., an optically efficient combiner) of such a repeatering station. As a general rule, that requirement can be met by simply gathering all of the incoming fibers into a bundle and by using a photodetector which is sufficiently large to accept light from all of bundled fibers. If, however, a smaller photodetector is required to, say, obtain a better high frequency response characteristic, an alternative approach may be required to provide the necessary combiner efficiency.

Reliability is another critically important issue in designing active repeater stations and the like for optical communication networks. Preferably, there is sufficient redundancy to sustain the network in the face of a failure of a component, such as a light source. See, Streifer, Scifres and Burnham, "Redundancy in Diode Laser Applications," *Xerox Disclosure Journal,* Vol. 5, No. 4, July/August 1980, pp. 399-400.

In accordance with the present invention, there is provided a uniconically tapered termination which may be used as a divider/combiner for efficiently coupling star configured optical communication networks to light sources and photodetectors.

In keeping with one of the more detailed aspects of the invention, a plurality of redundant light sources are coupled to a star configured optical communications network by separate uniconically tapered dividers which feed into a biconically tapered coupler so that the network can continue to function even should one of the light sources fail.

Embodiments of the present invention will now be described with reference to the accompanying drawings, in which:-

Figure 1 is a side view of a uniconically tapered optical divider constructed in accordance with this invention;

Figure 2 is an enlarged and simplified side view of the divider shown in Figure 1;

Figure 3 is an side view of a redundant input for a optical communication network embodying uniconically tapered optical dividers; and

Figure 4 is a side view of a uniconically tapered optical combiner embodying the present invention.

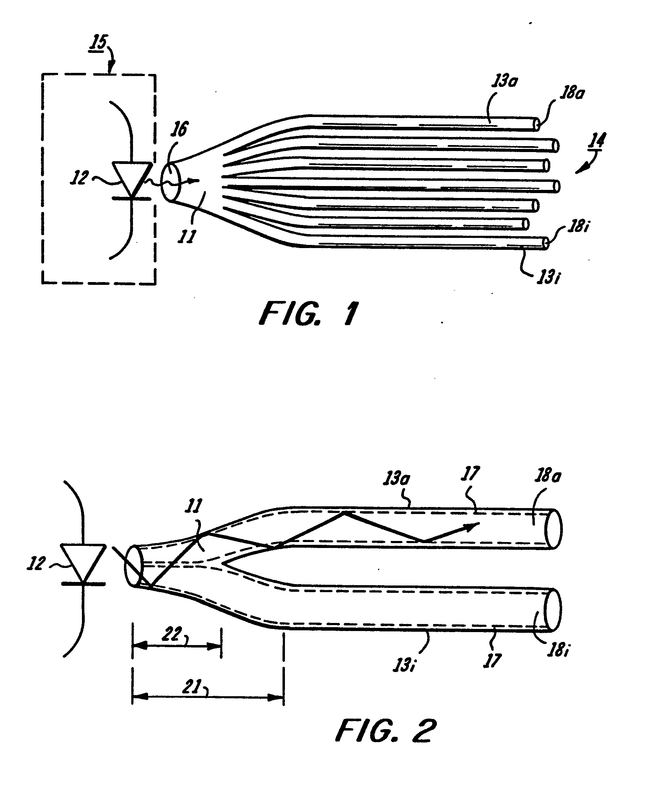

Turning now to the drawings, and at this point especially to Figure 1, there is a uniconically tapered divider 11 for coupling a light source, such as a LED 12, to a plurality of optical output fibers 13a—13i within a star configured optical communications network 14. Typically, the fibers 13a—13i are more or less conventionally clad, single strand, multi-mode optical fibers having either a graded or a step index profile. The LED 12 may, for example, be the light source of an active repeater station 15 (shown only in relevant part) for the network 14.

In accordance with the present invention, the divider 11 is a fused and tapered termination of the fibers 13a—13i. Preferably, the fibers 13a—13i are wound or twisted about a common center and placed under tension while being thermally fused together, whereby the region or segment of the fibers 13a—13i that is softened during the fusion process elongates with a conical taper. For example, the divider 11 may be fabricated by first forming a biconically tapered coupler through the use of most any of the known processes for fabricating such a coupler and by then severing the biconical coupler at its waist (i.e., along its section of minimum diameter).

The light source 12 typically is butt coupled to the divider 11 to inject light into the fibers 13a—13i. For that reason, the input face 16 of the divider 11 preferably is selected to have an area that is substantially equal to the effective emission area of the light source 12. If, as previously assumed, the light source 12 is a LED, light will radiate therefrom over a solid angle of approximately ±90°. Thus, it is important that the divider 11 have a wide acceptance angle.

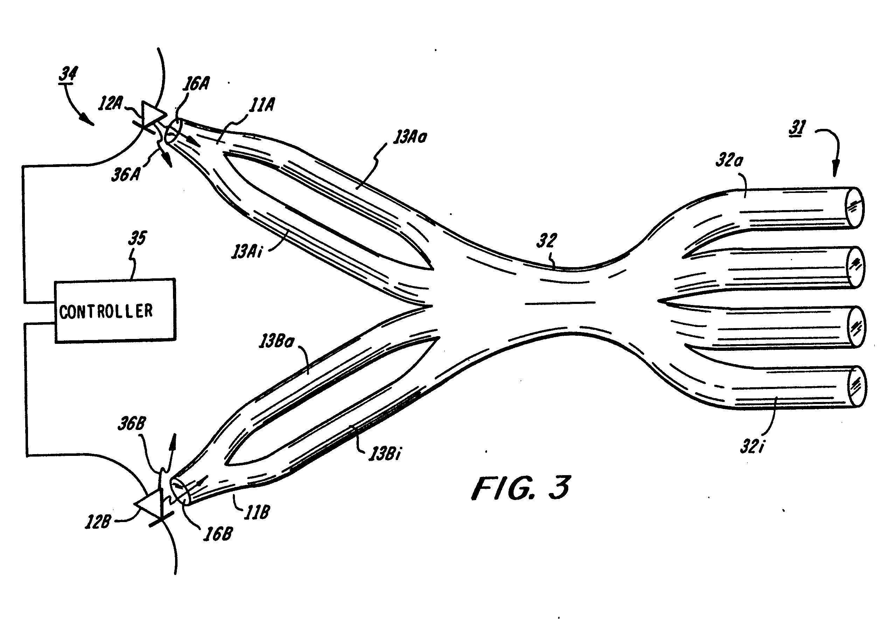

Referring to Figure 2, the internal acceptance angle of the divider 11 may be calculated to a first approximation by applying Snell's Law to determine the critical angle of incidence, $\Theta_{c(cl/s)}$, for total internal relection (TIR) from the cladding/surrounding environment interface of the divider 11:

$$\Theta_{c(cl/s)} = \sin^{-1}(n_s/n_{cl}) \tag{1}$$

where: $n_s =$ the refactive index of the surrounding environment, and

$n_{cl} =$ the refractive index of the cladding 17.

Assuming that the divider 11 is surrounded by air ($n_s = 1$) and that the refractive index of the cladding 17 is 1.47, the critical angle of incidence, $\Theta_{c(cl/s)}$, can be shown to be approximately 42.9°. The internal acceptance angle, $\alpha_{c(cl/s)}$, of the divider 11 is the angle about the central axis of the divider 11 within which light is guided by TIR and is given by:

$$\alpha_{c(cl/s)} = \pm \{\Pi/2 - \Theta_{c(cl/s)}\}. \tag{2}$$

Thus, for the case assumed above, the internal acceptance, angle $\alpha_{c(cl/s)}$ is approximately ±47.1°. This compares very favorably to the usual internal acceptance angle of only ±10° or so for a single fiber that is butt coupled to a light source; it being understood that light is guided in such a standard butt coupled fiber by TIR from the core/cladding interface, even though the refractive index difference thereacross is significantly smaller than across the cladding/air interface. Indeed, based on the ratio of the squares of the critical angles of incidence, it can be shown that the solid angle of the internal acceptance cone of the divider 11 is roughly sixteen times greater than the acceptance cone angle of a single fiber butt coupled to a light source.

Due to the uniconical taper of the divider 11, most of the light that is captured or guided by the cladding 17 is transformed to shallower angles so that it may be captured by the cores 18a–18i of the fibers 13a–13i. The critical angle of incidence, $\Theta_{c(co/cl)}$, for total internal reflectance from the core/cladding interface can be determined by modifying the terms of equation (1) as follows:

$$\Theta_{c(co/cl)} = \sin^{-1}(n_{cl}/n_{co}) \qquad (3)$$

where: $n_{co}$ = the refactive index of the cores $18\underline{a}-18\underline{i}$.

As before. the internal acceptance angle, $\alpha_{c(co/cl)}$, for the cores $18\underline{a}-18\underline{i}$ is given by:

$$\alpha_{c(co/cl)} = \pm \{\Pi/2 - \Theta_{c(co/cl)}\}. \qquad (4)$$

Accordingly, if it is assumed that the refractive index of the cores $18\underline{a}-18\underline{i}$ is 1.48 and that the refractive index of the cladding 17 is 1.47 (as previously stated). equation (4) can be solved to show that the internal acceptance angle, $\alpha_{c(co/cl)}$, for TIR from the core/cladding interface, is approximately $\pm 6.66°$.

Preferably, the transformation of the cladding guided light into a core guided mode is relatively gradual. To that end, the taper of the divider 11 is selected so that the cladding guided light experiences multiple reflections from the cladding/air interface at progressively decreasing angles as it propogates into the divider 11. Thus, only a portion of the cladding guided light is at a sufficiently shallow angle of incidence relative to the core/cladding interface to be captured by the cores $18\underline{a}-18\underline{i}$ at any given point along the length of the divider 11, but the balance of the cladding guided light is captured at other points along the divider 11 after experiencing one or more additional reflections. In practice, the taper 21 may, as shown, extend somewhat beyond the fused region 22 of the divider 15 into the branching or discrete region of the fibers $13\underline{a}-13\underline{i}$. Consequently, it should be understood that the transformation of light from a cladding guided mode to a core guided mode may occur anywhere within the tapered region 21.

Turning to Figure 3. in keeping with one of the more detailed aspects of the present invention, a plurality of uniconically tapered dividers $11\underline{A}$ and $11\underline{B}$ may be used to couple redundant light sources $12\underline{A}$ and $12\underline{B}$ in parallel to a star configured communications network 31. A biconically tapered coupler 32 couples light from any one or more of the sources $12\underline{A}$ and $12\underline{B}$ into the output fibers $32\underline{a}-32\underline{i}$ of the network 31. To that end, the input fibers of the coupler 32 are divided into separate groups $13\underline{A}a-13\underline{A}i$ and $13\underline{B}a-13\underline{B}i$ which are terminated by the dividers $11\underline{A}$ and $11\underline{B}$, respectively. Moreover, the light sources $12\underline{A}$ and $12\underline{B}$ are butt coupled to the faces $16\underline{A}$ and $16\underline{B}$ of dividers $11\underline{A}$ and $11\underline{B}$, respectively. Upper case alphabetic suffixes have been added to the reference numerals to emphasize the parallism of this embodiment. Otherwise, however, like reference numerals have been used to identify like parts because the dividers $11\underline{A}$ and $11\underline{B}$ are similar in construction and operation to the previously described divider 11 (Figures 1 and 2).

The redundant light sources 12A and 12B may, for example, be output sources of an active repeater station 34 (shown only in relevant part). For that application, the light sources 12A and 12B may be operated at a reduced, say, one half, output power level under normal opertating conditions. Furthermore, a controller 35 monitors the operation of the sources 12A and 12B, such as by detecting the intensity of the uncaptured radiation 36A and 36B therefrom. Consequently, should any one of the light sources, such as the light source 12A, fail, the controller 35 appropriately increases the output power of the other source or sources 12B to, say a full output power level, so that communication network 31 continues to operate without interruption while the source 12A is being replaced. Alternatively, of course the source 12A, could be operated at full power, and the other source 12B could then serve as a backup to be energized in response to a signal from the controller 35 if the source 12A should happen to fail

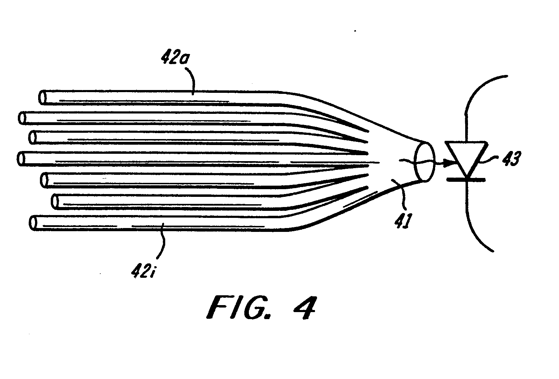

Referring to Figure 4, in keeping with still another aspect of the present invention, a uniconically tapered combiner 41 may be used to terminate a plurality of fibers 42a—42i so that a single photodetector 43 can accept light from all of the fibers 42a—42i. As will be appreciated, the combiner 41 is the output equivalent of the above described divider 11 and, therefore, need not be described in any further detail.

In view of the foregoing, it will now be understood that the present invention provides a uniconical termination for the optical fibers of an optical communication network. The termination may be used as a divider or as a combiner for coupling a light source or a photodetector, respectively, to the fibers of such a network. Moreover, the termination is particularly well suited for use with a biconically tapered coupler to provide parallel inputs or outputs for such a network.

-1-

Claims:

1. A termination for a plurality of optical fibers (13), characterised by a region (11) at one end of said fibers wherein said fibers (13) are fused together, said region (11) having a uniconical taper such that said termination conically expands from a relatively small face (16) at said one end of said fibers (13).

2. A termination according to claim 1 further including a light source (12) coupled to said face (16) for injecting light into said fibers, whereby said termination performs as an optical divider.

3. A termination according to claim 2, wherein said fibers (13) have cladding coated cores (18), the cladding (17) having a significantly larger critical angle than said cores (18) for capturing light from said light source (12), and said taper (11) is selected to provide for multiple reflections of the light captured by said cladding (17) at progressively decreasing angles of incidence, whereby said light is gradually transformed into said cores (18).

4. A termination according to claim 2 or 3, wherein said light source (12) is a LED butt coupled to said face (16) of said termination.

5. A termination according to claim 1 further including a coupler (32) having a plurality of input fibers (13) and a plurality of output fibers (32), said termination being one of a plurality of substantially identical terminations which are coupled in parallel to said coupler (32).

6. A termination according to claim 5, wherein said coupler (32) is a biconically tapered coupler, each of said terminations comprises a separate group of the input fibers (13) of said cupler (32), and respective light sources (12) are coupled to the faces (16) of said terminations so that there are redundant sources for injecting light into said output fibers (32).

7.	A termination according to claim 6 wherein said fibers (13, 32) have cladding coated cores (18), the cladding (17) having a significantly larger critical angle than said cores (18) for capturing light from said light sources (16), and the taper (11) of each of said terminations is selected to provide for multiple reflections of the light captured by said cladding (17) at progressively decreasing angles of incidence, whereby said light is gradually transformed into said cores.

8.	A termination according to claim 6 or 7, wherein said light sources (12) are LEDs butt coupled to the faces (16) of respective ones of said terminations.

9.	A termination according to claim 1 further including a photodetector (43) coupled to said face (16) for accepting light from said fibers (42), whereby said termination performs as an optical combiner.

FIG. 1

FIG. 2

FIG. 3

FIG. 4

0081349
Application number

**European Patent Office**

## EUROPEAN SEARCH REPORT

EP 82 30 6437

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 02 B 7/26 |
| Y | DE-A-2 655 382 (SIEMENS AG)<br>* Page 5, lines 9-24; page 6 above * | 1,2 | |
| | --- | | |
| Y | US-A-3 832 028 (F.P. KAPRON)<br>* Claim 1; figure 2 * | 1,2 | |
| | --- | | |
| A | DE-A-2 805 358 (AEG)<br>* Page 7 below * | 3,4 | |
| | --- | | |
| Y | APPLIED OPTICS, vol. 20, no. 14, July 1981, A. YOSHIDA et al. "Cascaded transmission star coupler", pages 2340-2344 | 5 | |
| | --- | | |
| Y | US-A-4 127 784 (J.M. PROUD et al.)<br>* Figure 5 * | 5 | TECHNICAL FIELDS SEARCHED (Int. Cl. ³) |
| | --- | | G 02 B 7/26<br>H 04 B 9/00 |
| A | DE-A-1 908 153 (GENERAL ELECTRIC CO.)<br>* Figure 1; page 3 below; pages 7, 8 * | 7,9 | |
| | ----- | | |

The present search report has been drawn up for all claims

| Place of search | Date of completion of the search | Examiner |
|---|---|---|
| BERLIN | 02-02-1983 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82